# EUROPEAN PATENT APPLICATION

(11) **EP 3 637 052 A1**
(43) Date of publication of application: **15.04.2020**
(21) Application number: 18813527.1
(22) Date of filing: 21.05.2018
(51) Int. Cl.: G01C 21/26, G08G 1/0969, G08G 1/16, G09B 29/00, G09B 29/10

(54) **INFORMATION PROCESSING DEVICE, INFORMATION PROCESSING METHOD, AND PROGRAM**

(30) Priority: 06.06.2017 JP 2017111610
(71) Applicant: Sony Corporation, Tokyo 108-0075 (JP)
(72) Inventor: MATSUNAGA, Hideyuki, Tokyo 108-0075 (JP)
(74) Representative: Witte, Weller & Partner Patentanwälte mbB
(86) International application number: PCT/JP2018/019483
(87) International publication number: WO 2018/225488

(57) **Abstract**

A configuration in which content indicating the danger of a danger point on a traveling route set by a driver is selected and is then presented to the driver to thereby enhance the driver's awareness of safe driving is achieved. The configuration includes a traveling-route setting unit of an automobile; an output-content determining unit determining, as output content, content indicating danger corresponding to the set traveling route; and a content output unit outputting output content determined by the output-content determining unit. The output-content determining unit determines content indicating danger of a danger point extracted from the traveling route as output content. For example, past accident content near a site of a danger point is determined as output content.

## Description

### [Technical Field]

The present disclosure relates to an information processing apparatus, an information processing method, and a program. More specifically, the disclosure relates to an information processing apparatus, an information processing method, and a program that output content for enhancing safe driving of an automobile.

### [Background Art]

For example, in a safe driving class for a driver who is to renew a driving license provided at a time of license renewal, a video content showing a traffic accident situation may be presented.

The purpose of presenting such content on accidents is to increase the awareness of the driver on safe driving making the driver realize fear of a traffic accident, for example.

However, in such a class, the driver views the content on accidents or the like while sitting in a chair placed in a classroom in which the safe driving class is held. This causes the driver to be likely to perceive an accident in the viewed content as a problem for someone else that is totally unrelated to himself.

In such a manner of presenting content in such a safe driving class, the driver immediately forgets about the viewed content, thereby failing to sufficiently achieve the purpose of increasing awareness of safe driving.

### [Citation List]

### [Patent Literature]

[PTL 1]
Japanese Patent Laid-Open No. 2013-168065

### [Summary]

### [Technical Problems]

One of factors that does not provide the viewer an actual feeling on accidents in the image content when the viewer views the image content on the accidents in a safe driving class or the like is that the viewer sits in a chair in a classroom while viewing the content. In other words, the factor is the viewing environment in which the viewer is not driving but is sitting in a chair in a safe classroom where there is no possibility of an occurrence of an accident.

In contrast, for example, a car navigation system used by a driver sitting on a driver's seat of an automobile may indicate danger points on a planned travel route when the driver is determining the planned driving route before start of driving, and display image content showing accidents at the danger points. In this way, the driver is expected to view the displayed content with seriousness and to drive safely.

An object of the present disclosure is to provide an information processing apparatus, an information processing method, and a program that provide such effective content, for example.

Specifically, for example, when the driver sits on the driver's seat of the automobile and uses a map display system such as a car navigation system installed in the automobile and determines a traveling route, content on accidents corresponding to danger points on the determined traveling route is displayed.

Thus, by presenting content suggesting danger, such as accidents in accordance with a planned traveling route to the driver in a timely manner, it is an object to provide an information processing apparatus, an information processing method, and a program that make it possible to increase the awareness of safe driving of the driver.

Note that a configuration of determining a traveling route using a map display system such as a car navigation system installed in an automobile, and a configuration of presenting dangerous locations are described in, for example, PTL 1.

### [Solution to Problems]

A first aspect of the present disclosure is an information processing apparatus including:
a traveling-route setting unit setting a traveling route of an automobile;
an output-content determining unit determining, as output content, content indicating danger corresponding to the traveling route set by the traveling-route setting unit; and
a content output unit outputting output content determined by the output-content determining unit,
in which the output-content determining unit determines content indicating danger of a danger point extracted from the traveling route as output content.

Further, a second aspect of the present disclosure is an information processing method performed by an information processing apparatus, the method including:
a traveling-route setting step of setting a traveling route of an automobile by a traveling-route setting unit;
an output-content determining step of determining, as output content, content indicating danger corresponding to the traveling route set in the traveling-route setting step, by an output-content determining unit; and
a content output step of outputting output content determined in the output-content determining step, by the content output unit,
in which, in the output-content determining step, content indicating danger of a danger point extracted from the traveling route is determined as output content.

Further, a third aspect of the present disclosure is a program causing an information processing apparatus to execute information processing, the processing including:
a traveling-route setting step of causing a traveling-route setting unit to set a traveling route of an automobile;
an output-content determining step of causing an output-content determining unit to determine, as output content, content indicating danger corresponding to the traveling route set in the traveling-route setting step; and
a content output step of causing the content output unit to output the output content determined by the output-content determining unit,
in which, in the output-content determining step, the output-content determining unit determines content indicating danger of a danger point extracted from the traveling route as output content.

Note that the program of the present disclosure is, for example, a program that can be provided by a storage medium and a communication medium provided in a computer-readable manner to an information processing apparatus or a computer system capable of executing various program codes. By providing such a program in a computer-readable manner, a process corresponding to the program is realized on an information processing apparatus or a computer system.

Still other objects, features and advantages of the present disclosure will become apparent from the more detailed description of the embodiments of the present disclosure and the accompanying drawings, which will be described below. Note that, in the present specification, a system is a logical assembly of a plurality of devices, and each device does not necessarily reside in the same housing.

### [Advantageous Effect of Invention]

According to a configuration of one embodiment of the present disclosure, it is possible to select content indicating danger of a danger point on a traveling route set by a driver, present the selected content to the driver, and enhance the driver's awareness of safe driving.

Specifically, the configuration includes, for example, a traveling-route setting unit of an automobile; an output-an output-content determining unit determining, as output content, content indicating danger corresponding to the traveling route; and, content output unit outputting the output content determined by the output-content determining unit. The output-content determining unit determines content indicating danger of a danger point extracted from the traveling route as output content. For example, past accident content near a site of a danger point is determined as output content.

According to this configuration, it is possible to select content indicating danger of a danger point on a traveling route set by a driver, present the selected content to the driver, and enhance the driver's awareness of safe driving.

The effects described in this specification are mere examples and are not limited, and may have additional effects.

### [Brief Description of Drawings]

[FIG. 1]

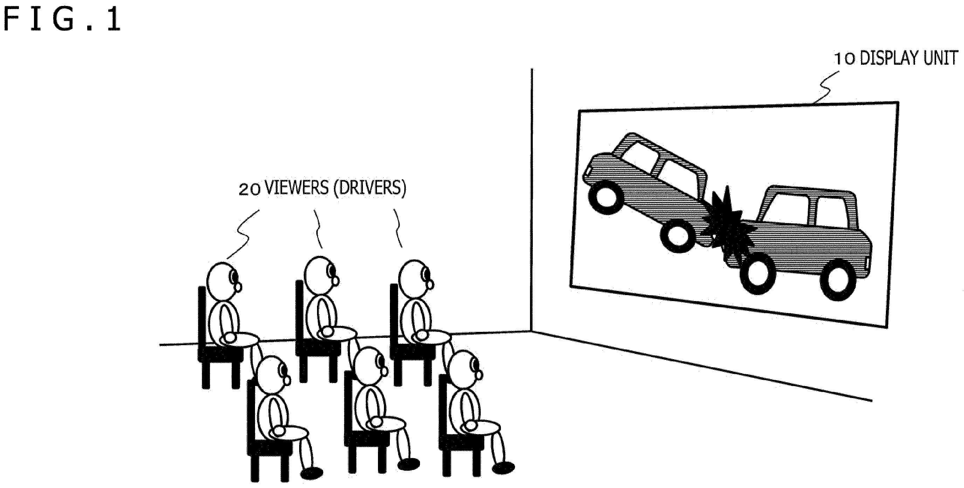

   FIG. 1 illustrates an example of typical content presentation.
[FIG. 2]

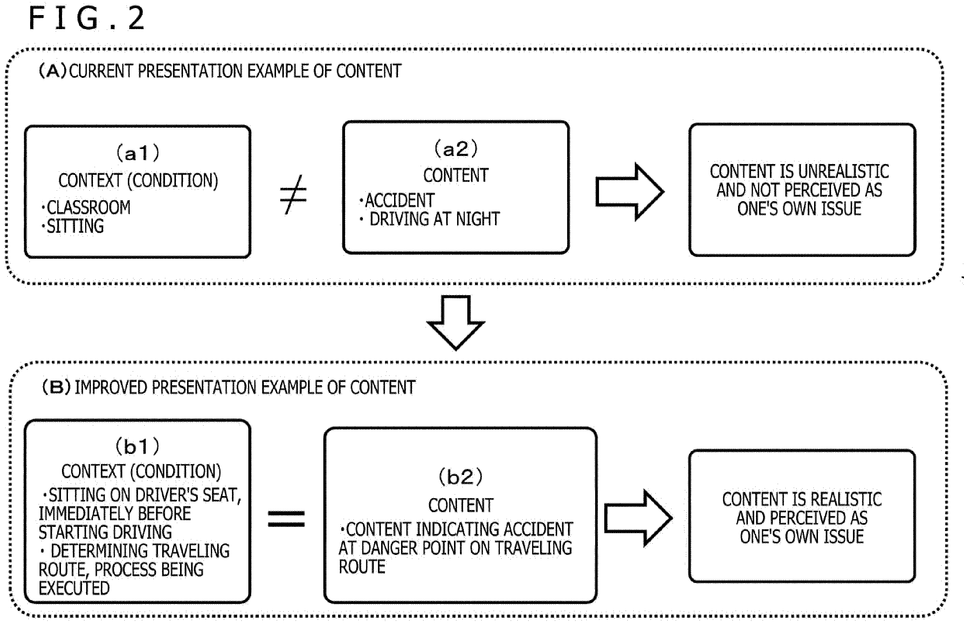

   FIG. 2 illustrates an example of typical content presentation and an example of improved content presentation.
[FIG. 3]

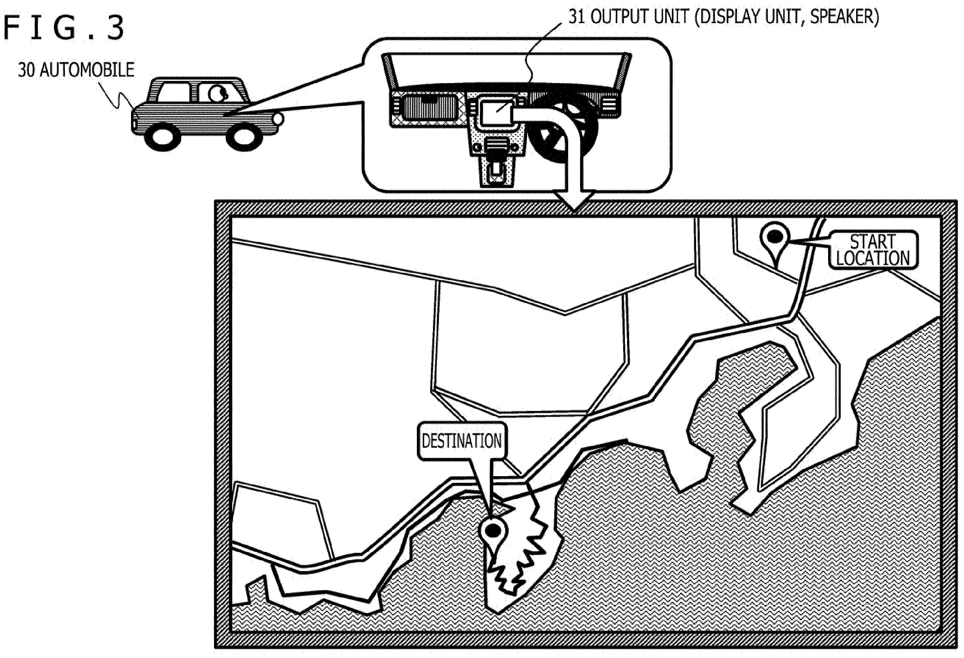

   FIG. 3 illustrates an example of display information when a driving route determining process is performed.
[FIG. 4]

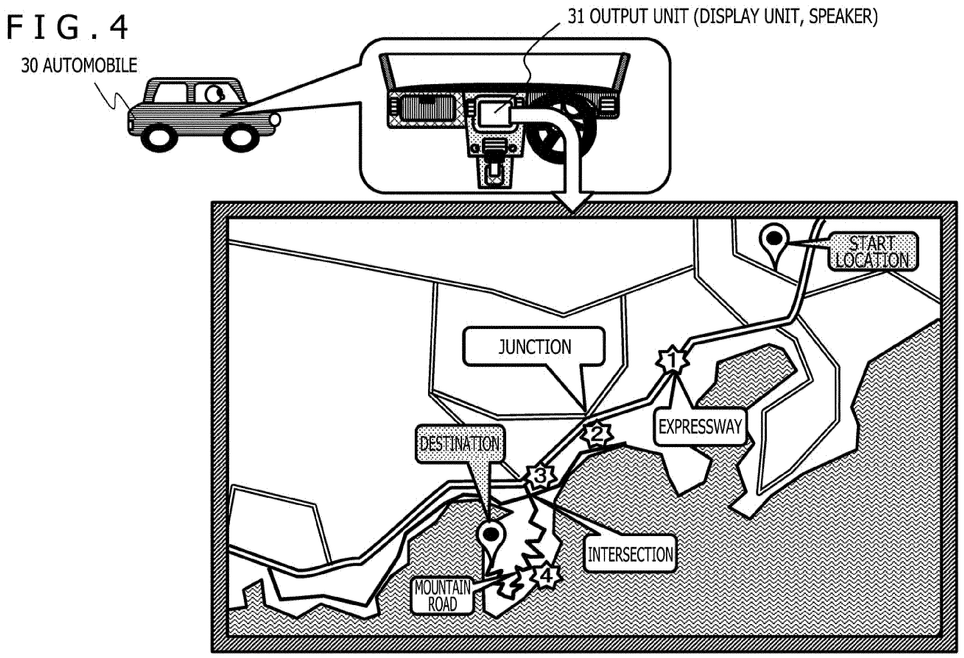

   FIG. 4 illustrates another example of display information when a driving route determining process is performed.
[FIG. 5]

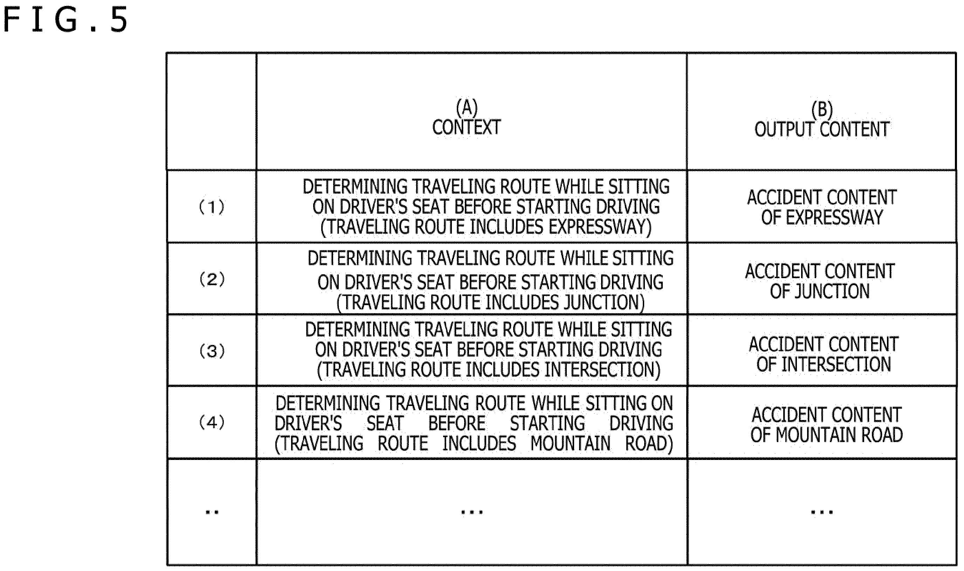

   FIG. 5 illustrates an example of a context/output-content correspondence map.
[FIG. 6]

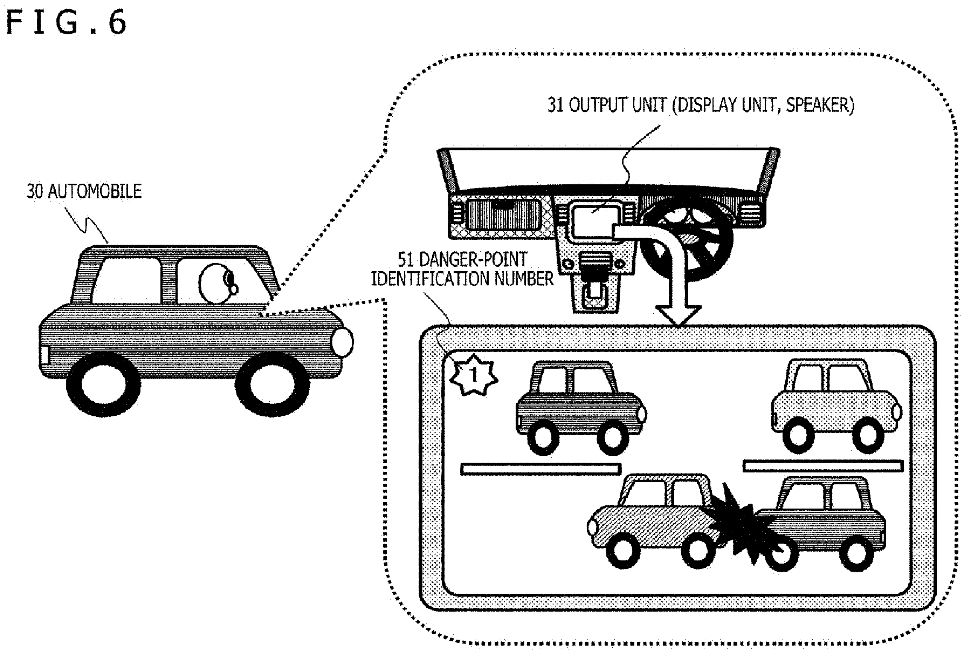

   FIG. 6 illustrates a display example of output content.
[FIG. 7]

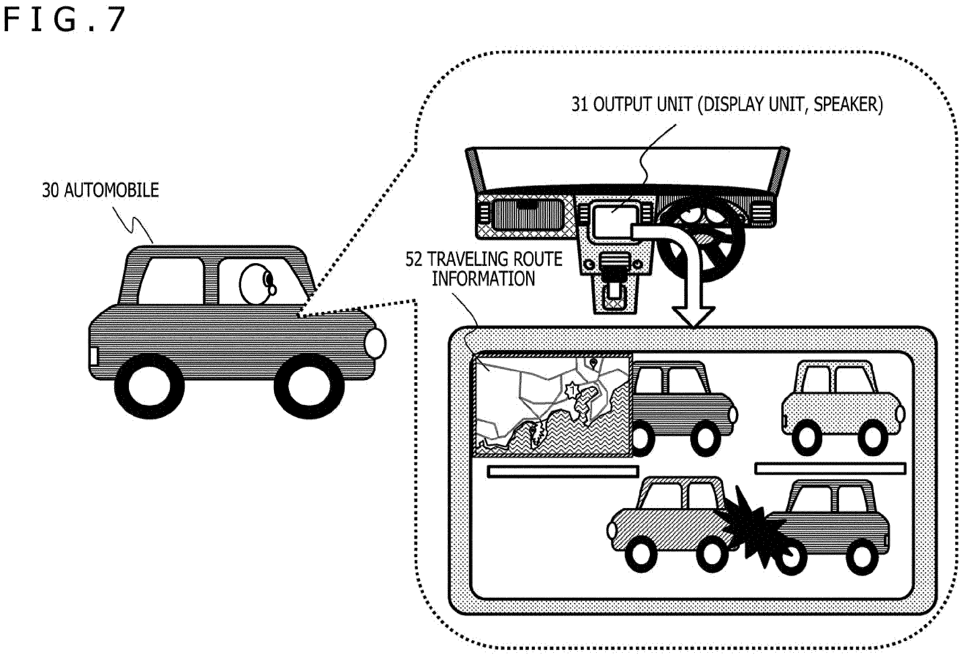

   FIG. 7 illustrates another display example of output content.
[FIG. 8]

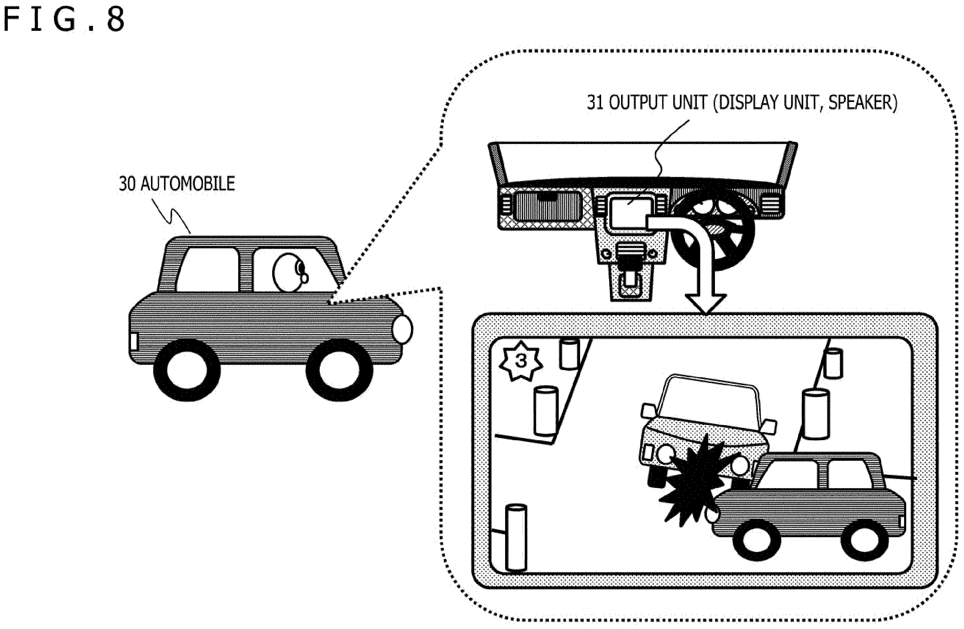

   FIG. 8 illustrates still another display example of output content.
[FIG. 9]

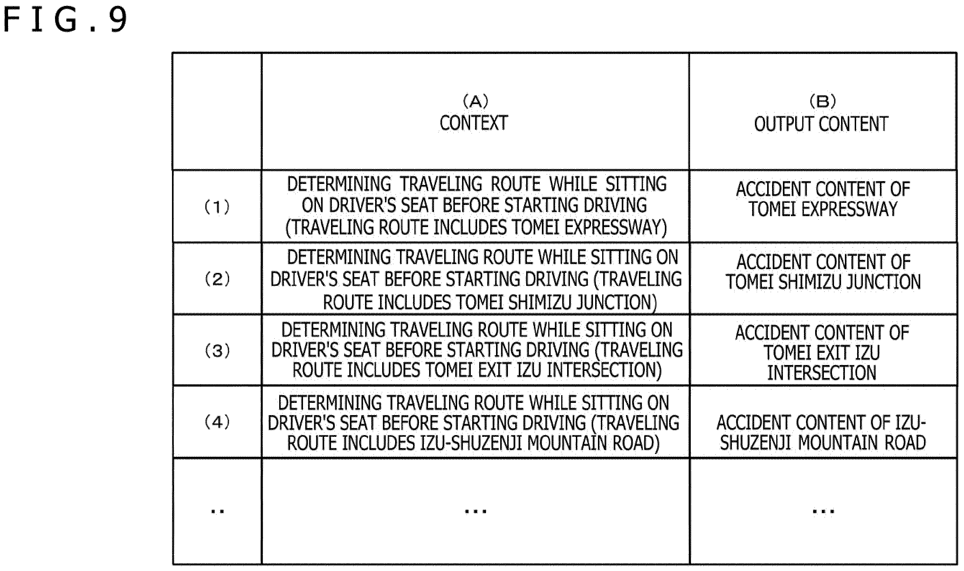

   FIG. 9 illustrates an example of a context/output-content correspondence map.
[FIG. 10]

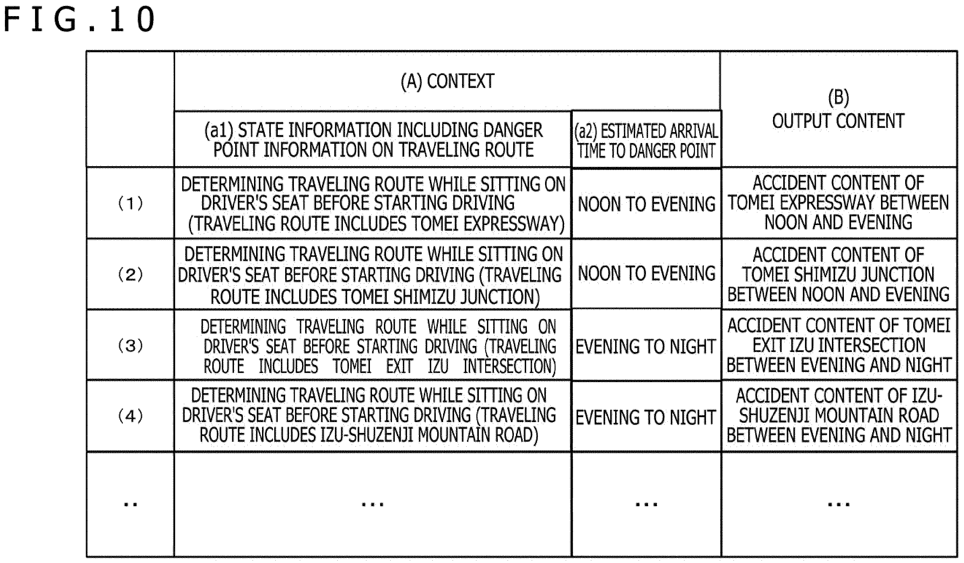

   FIG. 10 illustrates an example of a context/output-content correspondence map.
[FIG. 11]

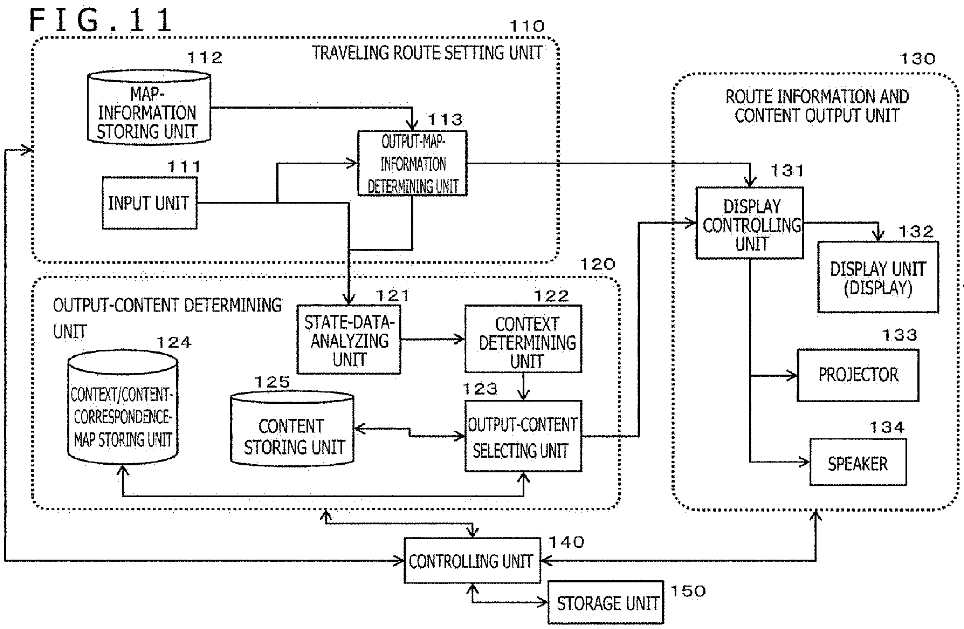

   FIG. 11 illustrates a configuration example of an information processing apparatus.
[FIG. 12]

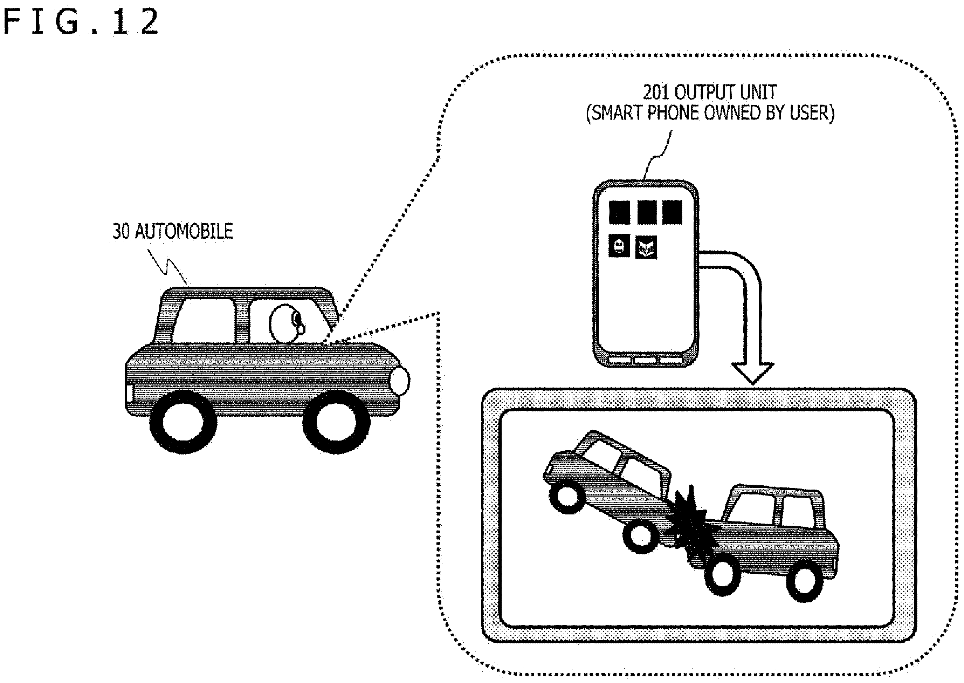

   FIG. 12 illustrates an example of an output unit outputting content.
[FIG. 13]

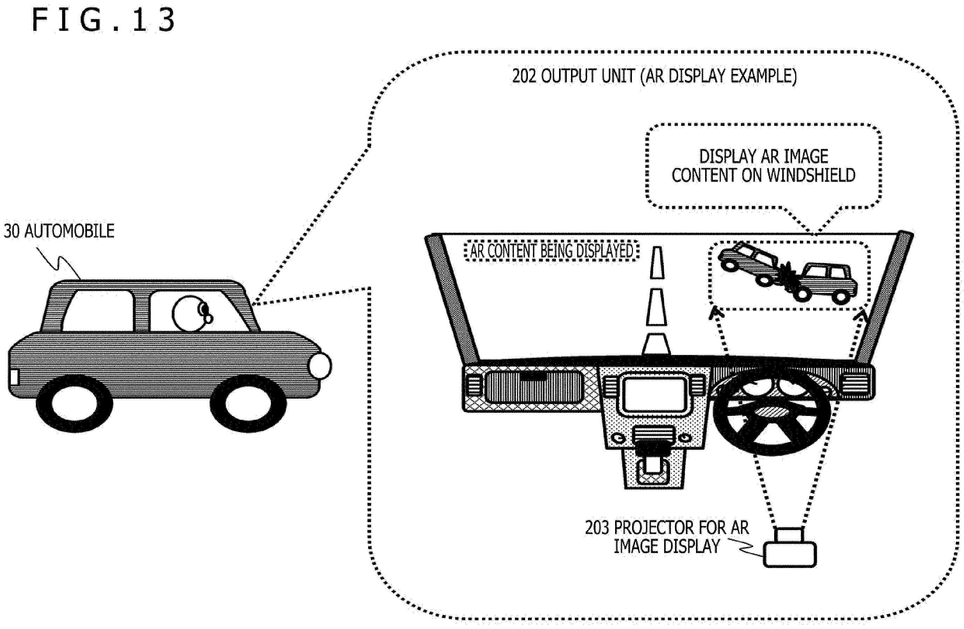

   FIG. 13 illustrates another example of an output unit outputting content.
[FIG. 14]

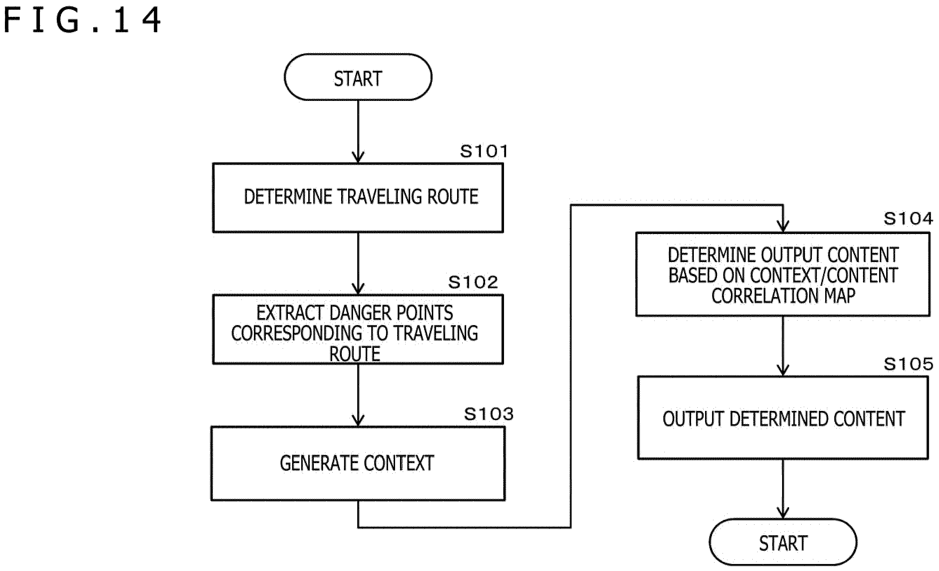

   FIG. 14 is a flowchart illustrating an information processing sequence executed by the information processing apparatus.
[FIG. 15]

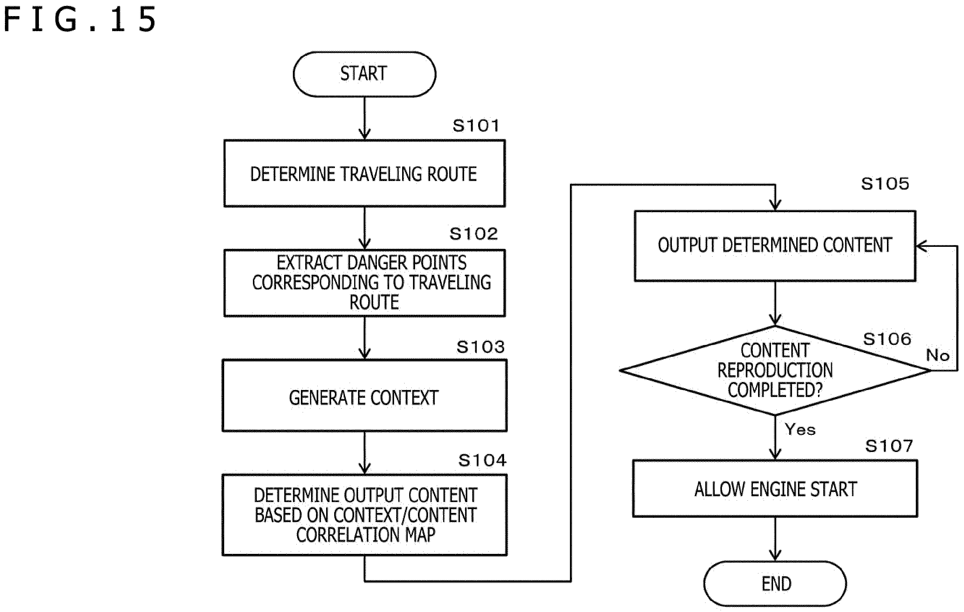

   FIG. 15 is a flowchart illustrating another information processing sequence executed by the information processing apparatus.
[FIG. 16]

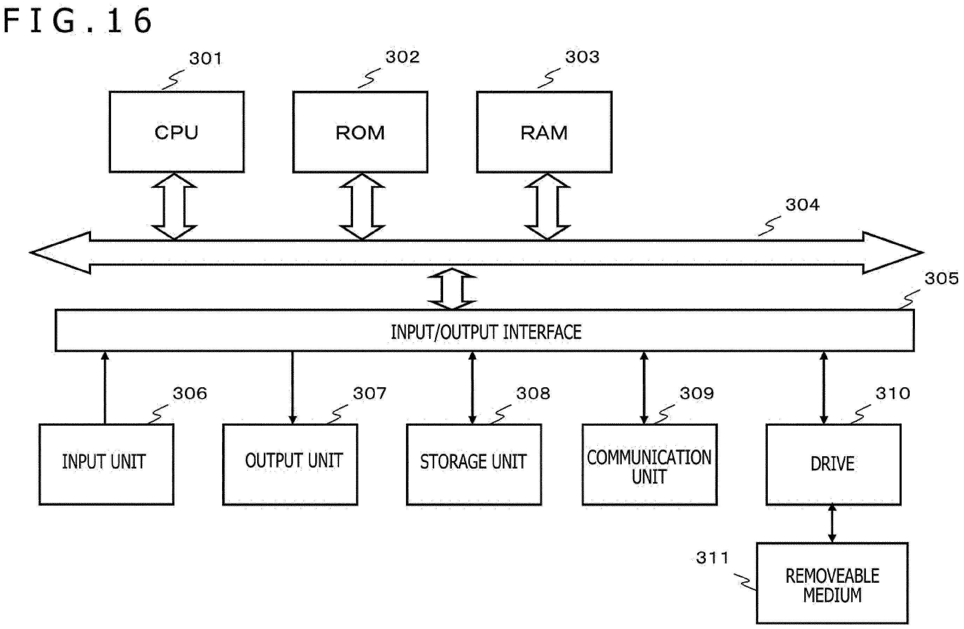

   FIG. 16 illustrates a hardware configuration example of the information processing apparatus.

### [Description of Embodiment]

An information processing apparatus, an information processing method, and a program according to the present disclosure will now be described in detail with reference to the drawings. Note that descriptions will be provided in accordance with the following items.
1. Current Situation for Method of Providing Content to Drivers and Problems Thereof
2. Examples of Presentation Process of Content Based on Context/Output-Content Correspondence Map
3. Other Specific Examples of Context/Output-Content Correspondence Map
   3-1. (a) Specific Example of Context/Output-Content Correspondence Map in Which Displayed Content Is Set to Accident Content at An Actual Site Coinciding with Danger Point on Traveling Route
   3-2. (b) Specific Example of Context/Output-Content Correspondence Map in Which Accident Content Likely to Occur at Time of Arriving at Danger Point on Traveling Route Is Set to Be Selectable
4. Configuration Example of Information Processing Apparatus
5. Sequence of Processes Executed by Information Processing Apparatus
6. Hardware Configuration Example of information Processing Apparatus
7. Summary of Configuration of Present Disclosure

### <1. Current Situation for Method of Providing Content to Drivers and Problems Thereof>

A current situation of a process of presenting content to drivers and problems thereof will now be described with reference to FIG. 1.

As described above, for example, in a safe driving class for renewal of a driver license or the like, image content on accidents are often presented to drivers to instruct the drivers to drive safely.

However, in such a class, viewers (drivers) 20 sit in safe chairs placed in a classroom where the class is held, for example, as illustrated in FIG. 1, and view image content of accidents displayed on a display unit 10.

In such a situation, the driver who is a viewer perceives the accident shown in the viewed content as a problem for someone else and not as his or her issue.

That is, even when content is presented in such a situation, the content viewer will immediately forget about details of the viewed content. As a result, it is difficult to realize the effect of increasing awareness of safe driving by the viewer (driver).

In contrast, for example, if a driver is caused to view content suggesting danger in a planned traveling route selected by the driver, e.g., image content showing an accident, before the driver starts driving an automobile, the content will be viewed with seriousness by the driver and leaves a deep impression that increases awareness of safe driving by the driver.

In this way, it is important to set provision of the content taking into consideration details of the content and the timing of presentation in order to effectively increase awareness of safe driving of the driver.

The present disclosure achieves a configuration that presents such effective content.

FIG. 2 illustrates a difference between a typical process of presenting content and a process of presenting content according to the present disclosure.

FIG. 2 includes each of diagrams illustrating the following examples (A) and (B):
(A) an example of a typical process of presenting content in the current situation; and
(B) an example of an improved process of presenting content.

In (A) the example of a typical process of presenting content in the current situation,
(a1) the content viewing condition (context) is a condition in which the viewer is seated on a chair in a classroom, and
(a2) the presented content is image content of accidents and nighttime driving.

In this way, if the content viewing condition (context) diverges from the presented content, the content viewer perceives the viewed content as to be something unreal, and cannot seriously perceive the content as to be his or her own issue. In other words, the effect of content viewing is small.

In contrast,
(B) the improved process of presenting content corresponds to the process according to the present disclosure described below.
(b1) The content viewing condition (context) is a condition in which the viewer is seated on the driver's seat of an automobile which is planned to start driving and in a state immediately before start of traveling, the automobile being about to start driving to determine the traveling route using a display unit such as a car navigation system, for example, installed in the automobile.
(b2) The presented content is image content of accidents at danger points on the determined traveling route.

In this example, the content viewing condition (context) is a condition in which the viewer is seated on the driver's seat of an automobile which is planned to start traveling, and the presented content is accident content relevant to the route to be traveled.

In such a case, the content viewer can perceive, with seriousness, the viewed accident content relevant to the traveling route as to be something realistic and as his or her own issue. In other words, the effect of content viewing can be enhanced.

### <2. Examples of Presentation Process of Content Based on Context/Output-Content Correspondence Map>

Examples of a presentation process of content based on context/output-content correspondence map will now be described.

As described with reference to FIG. 2, the process of presenting content in a configuration according to the present disclosure is performed in a state in which the driver is seated on the driver's seat of an automobile which is planned to start driving and in a state immediately before start of traveling and determines the traveling route using a display unit such as a car navigation system installed in the automobile.

FIG. 3 illustrates an example display on a display unit of the automobile.

The driver is seated on the driver's seat of the automobile which is planned to start driving and in a state immediately before start of traveling, and determines a traveling route using the display unit such as a car navigation system installed in the automobile.

FIG. 3 illustrates example display information in which the start point which is the current location, the destination, and the traveling route are displayed on the display unit.

In the information processing apparatus according to the present disclosure, at a time point at which the traveling route is determined by the user (driver), danger points on the determined traveling route, and content relevant to the danger points, specifically, for example, content of accidents that have actually occurred in the past are sequentially displayed on the display unit.

FIG. 4 illustrates a display example of information indicating the danger points on the traveling route displayed on the display unit after the user (driver) determines the traveling route.

FIG. 4 illustrates an example in which the following fourth danger points are displayed on the traveling route from the start point to the destination;
(1) expressway;
(2) junction;
(3) intersection; and
(4) mountain road.

The information processing apparatus according to the present disclosure displays content indicating the danger in association with the danger points on the traveling route illustrated in FIG. 4, specifically, for example, content of accidents that have actually occurred in the past.

A context/output-content correspondence map is used as information for determining the displayed content.

The context/output-content correspondence map is stored in a storage unit of the information processing apparatus and data in which correspondence is made between various contexts and suitable reproduction content items corresponding to the contexts.

FIG. 5 illustrates a specific example of a context/output-content correspondence map.

As illustrated in FIG. 5, the context/output-content correspondence map is map data in which correspondence is made between the following data items:
(A) context; and
(B) output content.

Entries set in the context/output-content correspondence map illustrated in FIG. 5 will now be described.

In the data entry (1),
(A) context (condition) is
   a context (condition) in which the user is determining the traveling route on the driver's seat before start of driving and an expressway is included in the traveling route.
(B) Output content set so as to correspond to this context is:
   (B) output content = "accident content on the expressway."

This is content for notifying the user (driver) about the danger of the "(1) expressway," which is a first danger point on the traveling route illustrated in FIG. 4.

The information processing apparatus displays on the display unit the content selected in accordance with this context/output-content correspondence map.

Note that the display process of the content is executed subsequent to the display process of the traveling route based on the determining process of the traveling route illustrated in FIG. 3 and the display process of the danger points on the traveling route illustrated in FIG. 4.

For example, the following four danger points exist on the traveling route illustrated in FIG. 4:
(1) expressway;
(2) junction;
(3) intersection; and
(4) mountain road.

Content regarding each of these four danger points is selected on the basis of the context/output-content correspondence map illustrated in FIG. 5, retrieved from a content storage unit, and displayed on the display unit.

That is, accident content indicating the danger related to the road characteristics at the danger point extracted from the traveling route is selected as output content.

A specific content display example will now be described with reference to FIG. 6.

The content display example illustrated in FIG. 6 is a display example of content selected on the basis of the data entry (1) of the context/output-content correspondence map illustrated in FIG. 5.

In other words, it is a display example of (B) output content = "accident content on the expressway" selected on the basis of the data entry (1) of the context/output-content correspondence map illustrated in FIG. 5.

The displayed content illustrated in FIG. 6 is content for notifying the user (driver) of the danger of "(1) expressway," which is a first danger point on the traveling route illustrated in FIG. 4.

The user (driver) who is the viewer views this displayed content to recognize the possibility of an accident on the expressway that is to be traveled, and is expected to drive the expressway safely.

Note that FIG. 6 illustrates an example in which accident content on the expressway is displayed together with a danger point identification number 51. Alternatively, as illustrated in FIG. 7, for example, the accident content may be displayed together with traveling route information 52.

The data entries of the context/output-content correspondence map will be further described with reference to FIG. 5.

In the data entry (2) of the context/output-content correspondence map illustrated in FIG. 5,
(A) context (condition) is
   a context (condition) in which the user is determining the traveling route on the driver's seat before start of driving, and a junction is included in the traveling route.
(B) Output content corresponding to this context is :
   (B) output content = "accident content on a junction."

This is content for notifying the user (driver) of the danger at the "(2) junction" which is a second danger point on the traveling route illustrated in FIG. 4, for example, video content of an actual accident that has occurred at the junction in the past.

In the data entry (3) of the context/output-content correspondence map illustrated in FIG. 5,
(A) context (condition) is
   a context (condition) in which the user is determining the traveling route on the driver's seat before start of driving and an intersection is included in the traveling route.
(B) Output content set so as to correspond to this context is:
   (B) output content = "accident content at an intersection."

This is content for notifying the user (driver) of the danger of "(3) intersection" which is a third danger point on the traveling route illustrated in FIG. 4.

A specific content display example will now be described with reference to FIG. 8.

The content display example illustrated in FIG. 8 is a display example of content selected on the basis of the data entry (3) of the context/output-content correspondence map illustrated in FIG. 5.

In other words, it is a display example of (B) output content = "accident content at an intersection" selected on the basis of the data entry (3) of the context/output-content correspondence map illustrated in FIG. 5.

The displayed content illustrated in FIG. 8 is content for notifying the user (driver) of the danger of "(3) intersection" which is a third danger point on the traveling route illustrated in FIG. 4.

The user (driver) who is the viewer views this displayed content to recognize the possibility of an accident at an intersection which exists in the traveling route that is to be traveled after viewing, and is expected to drive the intersection safely.

In the data entry (4) of the context/output-content correspondence map illustrated in FIG. 5,
(A) context (condition) is
   a context (condition) in which the user is determining the traveling route on the driver's seat before start of driving and a mountain road is included in the traveling route.

Output content (B)set so as to correspond to this context is:
(B) output content = "accident content on a mountain road."

This is content for notifying the user (driver) of the danger of "(4) mountain road" which is a fourth danger point on the traveling route illustrated in FIG. 4.

Thus, the information processing apparatus according to the present disclosure outputs content on accidents corresponding to the danger points on the traveling route at a time point at which the traveling route is determined by the user (driver), then allowing the user (driver) to view the output content.

As a result, the user (driver) views the content with seriousness, so that driving started immediately after the viewing can be safely carried out.

### <3. Other Specific Examples of Context/Output-Content Correspondence Map>

Other specific examples of the context/output-content correspondence map will now be described.

The content set in the context/output-content correspondence map illustrated in FIG. 5 is typical accident content corresponding to the various danger points on a road:
(1) expressway;
(2) junction;
(3) intersection; and
(4) mountain road,
which are detected on the traveling route illustrated in FIG. 4.

That is, in a case where there is "(1) expressway" on the traveling route, accident content on a typical expressway is retrieved from the content storage unit and then displayed.

In addition, in a case where there is "(3) intersection" on the traveling route, accident content at a typical intersection is retrieved from the content storage unit and then displayed.

That is, accident content indicating the danger related to the road characteristics at the danger point extracted from the traveling route is selected as output content.

Such content selection is an example, and alternatively, the displayed content may be also set as the accident content at actual sites coinciding with the danger points on the traveling route.

Alternatively, also possible is such a configuration that an arrival time of each danger point may be estimated on the basis of a time of determination of the traveling route by the user (driver) and a distance to each danger point, and content of an accident likely to occur at the estimated arrival time may be selected and presented.

The following specific examples of two kinds of context/output-content correspondence maps used for executing such processes will now be described:
(a) a specific example of a context/output-content correspondence map in which displayed content is set to accident content at an actual site coinciding with a danger point or the vicinity thereof on the traveling route; and
(b) a specific example of a context/output-content correspondence map in which accident content s likely to occur at a time of arriving at the danger point on the traveling route is set to be selectable.

### <3-1. (a) Specific Example of Context/Output-Content Correspondence Map in Which Displayed Content Is Set to Accident Content at An Actual Site Coinciding with Danger Point on Traveling Route>

A specific example of a context/output-content correspondence map in which displayed content is set to accident content at an actual site coinciding with a danger point or the vicinity thereof on the traveling route will now be described.

FIG. 9 illustrates an example of a context/output-content correspondence map in which the presented content is set to be accident content at a site coinciding with a danger point on the traveling route.

The context/output-content correspondence map illustrated in FIG. 9 has such a setting that the displayed content is set as accident content at sites coinciding with danger points on the traveling route and the context is data indicating specific sites corresponding to the content.

The context/output-content correspondence map illustrated in FIG. 9 is map data in which correspondence is made between the following datasets, like the context/output-content correspondence map described with reference to FIG. 5:
(A) context; and
(B) output content.

Example of entries set in the context/output-content correspondence map illustrated in FIG. 9 will now be described.

In the data entry (1),
(A) context (condition) is
   a context (condition) in which the user is determining the traveling route on the driver's seat before start of driving, and the Tomei expressway is included in the traveling route.
(B) Output content set so as to correspond to this context is:
   (B) output content = "accident content on the Tomei expressway."

This is content for notifying the user (driver) about the danger of the "(1) Tomei expressway," which is a first danger point on the traveling route illustrated in FIG. 4.

The information processing apparatus displays on the display unit the content selected in accordance with the context/output-content correspondence map, i.e., "accident content on the Tomei expressway."

The context/output-content correspondence map illustrated in FIG. 9 thus sets the content to be presented to the user (driver) as accident content at a location (on the Tomei expressway) coinciding with danger points on the traveling route set by the user.

In this manner, setting the configuration of presenting to the user (driver) the content indicating a condition of an accident that has occurred at a location coinciding with the road on which the user is to travel makes it possible to draw the user's attention even more.

In the data entry (2) of the context/output-content correspondence map illustrated in FIG. 9,
(A) context (condition) is
   a context (condition) in which the user is determining the traveling route on the driver's seat before start of driving and the Shimizu junction is included in the traveling route.
(B) Output content (B) set so as to correspond to this context is:
   (B) output content = "accident content at the Shimizu junction."

This is content for notifying the user (driver) of the danger of the "(2) Shimizu junction" which is a second danger point on the traveling route illustrated in FIG. 4.

The information processing apparatus displays on the display unit the content selected in accordance with the context/output-content correspondence map, i.e., "accident content at the Shimizu junction."

In the data entry (3) of the context/output-content correspondence map illustrated in FIG. 9,
(A) context (condition) is
   a context (condition) in which the user is determining the traveling route on the driver's seat before start of driving and the Tomei Exit Izu intersection is included in the traveling route.

The output content (B) set so as to correspond to this context is:
(B) output content = "accident content at the Tomei Exit Izu intersection."

This is content for notifying the user (driver) of the danger of the "(3) Tomei Exit Izu intersection (3)" which is a third danger point on the traveling route illustrated in FIG. 4.

Furthermore, in the data entry (4) of the context/output-content correspondence map illustrated in FIG. 9,
(A) context (condition) is
   a context (condition) in which the user is determining the traveling route on the driver's seat before start of driving and the Izu-Shuzenji mountain road is included in the traveling route.
(B) Output content set so as to correspond to this context is:
   (B) output content = "accident content on the Izu-Shuzenji mountain road."

This is content for notifying the user (driver) of the danger of the "(4) Izu-Shuzenji mountain road" which is a fourth danger point on the traveling route illustrated in FIG. 4.

In this way, the context/output-content correspondence map illustrated in FIG. 9 sets the context as condition data for identifying specific sites indicating the danger points on the traveling route, and the content is set as accident content at specific sites specified by the context.

That is, the content of an accident that has occurred in the past near a site of a danger point extracted from the traveling route set by the user (driver) is set as the output content.

By using the context/output-content correspondence map illustrated in FIG. 9, content indicating a condition of an accident at a location coinciding with the road on which the user is to travel can be presented to the user (driver), thereby making it possible to draw the user's attention even more.

### <3-2. (b) Specific Example of Context/Output-Content Correspondence Map in Which Accident Content Likely to Occur at Time of Arriving at Danger Point on Traveling Route Is Set to Be Selectable>

A specific example of a context/output-content correspondence map in which accident content likely to occur at a time of arriving at a danger point on the traveling route is set to be selectable will now be described.

FIG. 10 illustrates an example of a context/output-content correspondence map in which the presented content is set as content of accidents likely to occur at a time of arriving at the danger point on the traveling route.

The context/output-content correspondence map illustrated in FIG. 10 has such a configuration allowing the displayed content to be set as accident content at a site coinciding with a danger point on the traveling route, and the content of accidents likely to occur at a time of arriving at the danger point on the traveling route to be further selected and then presented.

The context/output-content correspondence map illustrated in FIG. 10 is also map data in which correspondence is made between the following data, like the context/output-content correspondence maps described with reference to FIGS. 5 and 9:
(A) context; and
(B) output content.

The context/output-content correspondence map illustrated in FIG. 10 includes:
as (A) context,
(a1) state information including danger point information on the traveling route; and
(a2) estimated arrival time to the danger point.

Note that "(a2) estimated arrival time to the danger point" is time information calculated by the data processing unit of the information processing apparatus, and is the arrival time to each danger point estimated on the basis of the traveling route determination time by the user (driver) and the distance to each danger point.

Examples of entries set in the context/output-content correspondence map illustrated in FIG. 10 will be described.

In (A) Context (condition) of the data entry (1),
(a1) state information including danger point information on the traveling route is such a context that the user is determining the traveling route on the driver's seat before start of driving and the Tomei expressway is included in the traveling route; and
(a2) a danger point estimated arrival time is such a context that the estimated arrival time to the danger point (the Tomei expressway) is between noon and evening.

(B) Output content set so as to correspond to this context is:
(B) output content = "accident content on the Tomei expressway at a time between the noon and the evening."

This is the content for notifying the user (driver) of the danger during the time between the noon and the evening during which the user (driver) is estimated to arrive at "(1) the Tomei expressway," which is a first danger point on the traveling route illustrated in FIG. 4 and is "content of an accident that has occurred on the Tomei expressway at a time between the noon and the evening."

The information processing apparatus displays on the display unit the content selected in accordance with the context/output-content correspondence map, i.e., "accident content on the Tomei expressway at a time between the noon and the evening."

The context/output-content correspondence map illustrated in FIG. 10 sets the content to be presented to the user (driver) as accident content at a location (on the Tomei expressway) coinciding with danger points on the traveling route set by the user in this way, and as accident content indicating the danger of an estimated arrival time (between the noon and the evening) during which the user (driver) is estimated to arrive at the specific danger point (the Tomei expressway).

The content indicating a condition of an accident that has occurred at a location and time coinciding with the road on which the user is to travel can be presented to the user (driver) in this way, thereby making it possible to draw the user's attention even more.

In the data entry (2) of the context/output-content correspondence map illustrated in FIG. 10,
in (A) context (condition),
(a1) state information including danger point information on the traveling route is such a context that the user is determining the traveling route on the driver's seat before start of driving and the Shimizu junction is included in the traveling route; and
(a2) a danger point estimated arrival time is such a context that the estimated arrival time to the danger point (the Shimizu junction) is between the noon and the evening.

(B) Output content set so as to correspond to this context is:
(B) output content = "accident content at the Shimizu junction at a time between the noon and the evening."

This is the content for notifying the user (driver) of the danger during the time between the noon and the evening during which the user (driver) is estimated to arrive at the "(2) Shimizu junction" which is a second danger point on the traveling route illustrated in FIG. 4 and is "content of an accident that has occurred at the Shimizu junction at a time between the noon and the evening."

The information processing apparatus displays on the display unit the content selected in accordance with the context/output-content correspondence map, i.e., "accident content at the Shimizu junction at a time between the noon and the evening."

Also, in (A) context (condition) of the data entry (3) of the context/output-content correspondence map illustrated in FIG. 10,
(a1) state information including danger point information on the traveling route is such a context that the user is determining the traveling route on the driver's seat before start of driving and the Tomei-exit Izu intersection is included in the traveling route; and
(a2) a danger point estimated arrival time is such a context that the estimated arrival time to the danger point (the Tomei-exit Izu intersection) is between the evening and the night.

Output content (B) set so as to correspond to this context is:
(B) output content = "accident content at Tomei-exit the Izu intersection at a time between the evening and the night."

This is the content for notifying the user (driver) of the danger during the time between the evening and the night during which the user (driver) is estimated to arrive at the "(3) Tomei-exit Izu intersection" which is a third danger point on the traveling route illustrated in FIG. 4 and is "content of an accident that has occurred at the Tomei-exit Izu intersection at a time between the evening and the night."

The information processing apparatus displays on the display unit the content selected in accordance with this context/output-content correspondence map, i.e., "content of an accident that has occurred at the Tomei-exit Izu intersection at a time between the evening and the night."

Furthermore, in the data entry (4) of the context/output-content correspondence map illustrated in FIG. 10, in (A) context (condition),
(a1) state information including danger point information on the traveling route is such a context that the user is determining the traveling route on the driver's seat before start of driving and the Izu-Shuzenji mountain road is included in the traveling route; and
(a2) a danger point estimated arrival time is such a context that the estimated arrival time to the danger point (the Izu-Shuzenji mountain road) is between the evening and the night.

Output content (B) set so as to correspond to this context is:
(B) output content = "accident content on the Izu-Shuzenji mountain road at a time between the evening and the night."

This is the content for notifying the user (driver) of the danger during the time between the evening and the night during which the user (driver) is estimated to arrive at the "(4) Izu-Shuzenji mountain road" which is a fourth danger point on the traveling route illustrated in FIG. 4 and is "content of an accident that has occurred at the Izu-Shuzenji intersection at a time between the evening and the night."

The information processing apparatus displays on the display unit the content selected in accordance with this context/output-content correspondence map, i.e., "content of an accident that has occurred at the Izu-Shuzenji mountain road at a time between the evening and the night."

In the process using this context/output-content correspondence map illustrated in FIG. 10, the output content is content of accident that has occurred in the past near a danger point site at an estimated arrival time to the danger point estimated on the basis of the set time of the traveling route set by the user (driver) and the distance to the danger point.

By using the context/output-content correspondence map illustrated in FIG. 10, content indicating a condition of an accident at a location coinciding with the road on which the user is to travel at the estimated arrival time can be presented to the user (driver), thereby making it possible to draw the user's attention even more.

### <4. Configuration Example of Information Processing Apparatus>

The information processing apparatus according to the present disclosure has a configuration of selecting and presenting content indicating the danger of the danger points on the traveling route, for example, an accident content, using the above-described context/output-content correspondence map when the driver determines the traveling route.

Note that analysis of the context (condition), selection of the output content, content output timing, etc., are comprehensively controlled by the control unit of the information processing apparatus installed in the automobile.

A specific configuration example of the information processing apparatus executing these processes will now be described with reference to FIG. 11.

FIG. 11 is a configuration diagram illustrating the information processing apparatus installed on an automobile, and is a block diagram illustrating a configuration example of the information processing apparatus performing analysis of context (condition), selection of output content, timing control of content output, etc.

As illustrated in FIG. 11, the information processing apparatus includes a traveling-route setting unit 110, an output-content determining unit 120, a route-information and content-output unit 130, a control unit 140, and a storage unit 150.

The traveling-route setting unit 110 is, for example, a navigation system, and the user can determine a traveling route by using map information and inputting the start point and the destination.

The output-content determining unit 120 performs analysis of the traveling route set by the traveling-route setting unit 110, a context determination process, and the like, and further performs a process of determining output content corresponding to the context.

For example, if an expressway is included in the traveling route as a danger point, a process of selecting the content of an accident on the expressway or other processes is performed.

The route-information and content-output unit 130 outputs the content determined by the output-content determining unit 120.

The control unit 140 comprehensively controls the processes performed by the traveling-route setting unit 110, the output-content determining unit 120, and the route-information and content-output unit 130.

The storage unit 150 stores, for example, processing programs, processing parameters, and the like and is also used as work areas and like for the processes performed by the control unit 140 etc.

The control unit 140 controls the various processes in accordance with, for example, the programs stored in the storage unit 150.

A detailed configuration and processing examples of each of these components such as the traveling-route setting unit 110, the output-content determining unit 120, and the route-information and content-output unit 130 will now be described.

The traveling-route setting unit 110 includes an input unit 111, a map-information storing unit 112, and an output information determining unit 113.

The output information determining unit 113 outputs the map information retrieved from the map-information storing unit 112 to the route-information and content-output unit 130, and displays the map information on, for example, a display unit (display) 132.

The user (driver) views the map displayed on the display unit (display) 132, inputs the start point and the destination via the input unit 111, and determines the traveling route.

Danger points are preliminarily registered in the map information stored in the map-information storing unit 112. When there is a danger point on the route determined by the user, identification information indicating the danger point is displayed on the map.

Specifically, as described above with reference to FIG. 4, for example, the traveling route information on which pieces of danger-point identification information including "(1) expressway, (2) junction, (3) intersection, and (4) mountain road" indicating the danger points are superposed is displayed.

The output-content determining unit 120 includes a condition data analyzing unit 121, a context determining unit 122, an output-content selecting unit 123, a context/output-content-correspondence-map storing unit 124, and a content storing unit 125.

The condition data analyzing unit 121 analyzes danger points on the traveling route which is condition data input from the traveling-route setting unit 110, and the conditions at the arrival times to the danger points etc., and transfers the analyzed result to the context determining unit 122.

The context determining unit 122 selects and determines content applicable for determining output context on the basis of the input condition data received from the condition data analyzing unit 121. The context determining unit 122 receives various condition data items retrieved from the condition data analyzing unit 121 by the traveling-route setting unit 110. The context determining unit 122 selects or determines contexts applicable to the determination of output content on the basis of the input data.
The result is input to the output-content selecting unit 123.

The output-content selecting unit 123 uses maps stored in the context/output-content correspondence-map storing unit 124 to determine the optimal output content corresponding to the driving condition (context).

The context/output-content correspondence maps stored in the context/output-content correspondence-map storing unit 124 are, for example, the maps described above with reference to FIGS. 5, 9, and 10.

The context/output-content correspondence maps such as those described above with reference to FIGS. 5, 9, and 10 are map data in which correspondence is made between the following data:
(A) context; and
(B) output content.

The output-content selecting unit 123 uses maps stored in the context/output-content correspondence-map storing unit 124 to determine the optimal output content corresponding to the driving condition (context), acquire the optimal output content from the content storing unit 125, and output the optimal output content to the route-information and content-output unit 130.

For example, in a case where the output-content selecting unit 123 determines the output content using the context/output-content correspondence map illustrated in FIG. 5, the following process is performed.

Typical accident content corresponding to each of the following danger points included in the traveling route determined by the user (driver) is selected as presented content:
(1) expressway;
(2) junction;
(3) intersection; and
(4) mountain road.

Note that such typical accident content corresponding to each of the danger points is stored in the content storing unit 125.

For example, in a case where the output-content selecting unit 123 determines the output content using the context/output-content correspondence map illustrated in FIG. 9, the following process is performed.

Specific accident content corresponding to each of the following danger points included in the traveling route determined by the user (driver) is selected as presented content:
(1) Tomei expressway;
(2) Shimizu junction;
(3) Tomei-exit Izu intersection; and
(4) Izu-Shuzenji mountain road.

Note that such specific accident content corresponding to each of the danger points is stored in the content storing unit 125.

For example, when the output-content selecting unit 123 determines the output content using the context/output-content correspondence map illustrated in FIG. 10, the following process is performed.

Specific danger points included int the traveling route determined by the user (driver) are:
(1) Tomei expressway;
(2) Shimizu junction;
(3) Tomei-exit Izu intersection; and
(4) Izu-Shuzenji mountain road.

The specific accident content corresponding to each of these danger points in addition to content corresponding to each of the estimated arrival times to the respective danger points acquired through processing by the condition data analyzing unit 121 and the context determining unit 122 are selected as presented content.

Note that such accident content corresponding to each of the danger points at the respective estimated arrival times is stored in the content storing unit 125.

As described above, the output-content selecting unit 123 of the output-content determining unit 120 refers to a context/output-content correspondence map stored in the context/output-content correspondence-map storing unit 124, i.e., the context/output-content correspondence map in which the pieces of data described with reference to FIG. 5, 9, or 10 are stored to determine the content to be outputted.

Furthermore, the output-content selecting unit 123 acquires the determined output content from the content storing unit 125 and then inputs the acquired content to the route-information and content-output unit 130.

The content storing unit 125 stores various types of content, i.e., various types of content registered in the context/output-content correspondence maps.

A configuration of and processing by the route-information and content-output unit 130 will now be described.

The route-information and content-output unit 130 includes an output control unit 131, a display unit (display) 132, a projector 133, and a speaker 134. Note that the projector 133 is usable in a case where the content is to be projected for display. in a case where the content is not to be projected for display, the projector 133 can be omitted.

The output control unit 131 of the route-information and content-output unit 130 performs display control of map information including the traveling route determined by the output-map-information determining unit 113 of the traveling-route setting unit 110. The output control unit 131 performs display control of, for example, map information including danger-point identification information illustrated in FIG. 4.

Furthermore, the output control unit 131 of the route-information and content-output unit 130 receives content corresponding to the context from the output-content determining unit 120, and performs a reproduction process of the input content. The reproduction content is output by use of the display unit (display) 132, the projector 133, and the speaker 134.

Note that, in addition to moving image content, various types of content, for example, still images or content with only audio can be output.

Consequently, the driver of an automobile views the content of danger points on the route to be traveled, and can perceive the danger and accident scenes in the viewed content as something relevant to himself or herself with an actual feeling. Through content viewing, the driver can enhance his or her awareness of safe driving.

Note that the route-information and content-output unit 130 includes a display unit, a speaker, and the like that are watchable, for example, from the driver's seat of the automobile.

In addition, the route-information and content-output unit 130 may use, for example, a portable terminal of the driver, specifically, a portable terminal such as a smartphone, in addition to output units provided in the automobile described above.

FIG. 12 illustrates an example of an output unit 201 using a portable terminal (smartphone) of the driver.

Furthermore, as illustrated in FIG. 13, a windshield in front of the driver may be used as an image display region, i.e., an output unit 202, to display content on the windshield using an image displaying projector 203 that displays AR (Augmented Reality) images.

In this way, the route-information and content-output unit 130 illustrated in FIG. 11 can have various different configurations.

### <5. Sequence of Processes Executed by Information Processing Apparatus>

The sequence of a process executed by the information processing apparatus will now be described with reference to the flowchart in FIG. 14.

The flowchart illustrated in FIG. 14 is executed by the information processing apparatus having the configuration illustrated in FIG. 11.

Specifically, for example, the control unit 140 of the information processing apparatus illustrated in FIG. 11 executes a process in accordance with a program stored in the storage unit 150.

The processes in the steps in the flowchart illustrated in FIG. 14 will be described below in sequence.

### (Step S101)

First, in step S101, the traveling-route setting unit 110 illustrated in FIG. 11 receives an input of the start point etc., by the user, and determines the traveling route.

### (Steps S102 and S103)

Then, in step S102, danger points on the traveling route determined in step S101 are extracted. In step S103, respective contexts corresponding to the extracted danger points are generated.

These processes are performed by the condition data analyzing unit 121 and the context determining unit 122 of the output-content determining unit 120 illustrated in FIG. 11.

Note that the generated contexts have different settings depending on the context/output-content correspondence map to be used.

For example, in a case where the context/output-content correspondence map described with reference to FIG. 5 is used, the presented content is typical content corresponding to the characteristics of the road, e.g., expressway, intersection, or the like.

In this case, it is only required that the generated context may include information indicating such characteristics of typical roads, e.g., information indicating characteristics of typical roads, such as (1) expressway, (2) intersection, or the like.

Moreover, in a case where the context/output-content correspondence map described with reference to FIG. 9 is used, the presented content is content at specific sites such as the Tomei expressway or the Tomei expressway exit Izu intersection. In this case, the generated context should include information indicating such specific road site. For example, the following information is required:
(1) Tomei expressway; and
(2) Tomei-exit Izu intersection.

Also, in a case where the context/output-content correspondence map described with reference to FIG. 10 is used, the presented content is content corresponding to specific sites such as the Tomei expressway or the Tomei expressway exit Izu intersection, further the content for a specific time, such as during a time between the noon and the evening.

In this case, the generated context should include information indicating such specific road site and specific time. For example, the following information is required to be included in the generated context:
(1) Tomei expressway between the noon and the evening; and
(2) Tomei-exit Izu intersection between the noon and the evening.

In this way, in steps S102 and S103, danger points on the traveling route determined in step S101 are extracted, and a context (condition data) corresponding to the context/output-content correspondence map to be used is generated.

That is, a context applicable to the determination of the output content is generated.

### (Step S104)

In step S104, the output-content selecting unit 123 of the output-content determining unit 120 illustrated in FIG. 5 uses maps stored in the context/output-content correspondence-map storing unit 124 to select the optimal content corresponding to the driving condition (context).

As described above, the context/output-content correspondence-map storing unit 124 has a context illustrated in FIG. 5, 9, or 10, and correspondence data of the output content stored therein.
the output-content selecting unit 123 compares the context input from the context determining unit 122 with the context registered in the context/output-content correspondence map, selects an entry that is the same or similar, and determines the output content registered in the selected entry as the output context.

### (Step S105)

The next process in step S105 is performed by the route-information and content-output unit 130 illustrated in FIG. 11.

The route-information and content-output unit 130 illustrated in FIG. 11 outputs the content selected by application of the context/output-content correspondence map.

The output content includes context, i.e., content indicating the danger corresponding to danger points on a route selected by the driver, e.g., content including a video image of an accident.

The reproduction content is output by use of the display unit (display) 132, the projector 133, and the speaker 134 of the route-information and content-output unit 130 illustrated in FIG. 11.

Note that, in addition to moving image content, various types of content, for example, still images or content with only audio can be output.

Consequently, the driver of an automobile views the content corresponding to the route to be traveled by the driver, and can perceive the danger and accident scenes in the viewed content as something relevant to himself or herself with an actual feeling. Through content viewing, the driver can enhance his or her awareness of safe driving.

Note that, since it is dangerous to drive while viewing the content, it is desirable to a timing of reproducing the content is to be immediately after the user (driver) determines the traveling route and before start of the automobile.

Also, a configuration to control a setting such that the engine cannot be started until content viewing is finished may be applicable.

A process sequence in a case where such engine start control is executed is illustrated in FIG. 15.

The flowchart illustrated in FIG. 15 is similar to the flowchart illustrated in FIG. 14, except that steps S106 and S107 are added after step S105.

The processes in steps S101 to S105 are similar to those in the flowchart illustrated in FIG. 14 described above.

The processes of steps S106 and S107, which are additional steps, will now be described.

### (Step S106)

Step S106 is performed after the start of the content reproduction process in step S105.

Step S106 determines whether or not the reproduction of the content has been completed.

The reproduction content is all the content of danger points extracted from the traveling route set by the user.

For example, the following four danger points exist as illustrated in FIG. 4:
(1) expressway;
(2) junction;
(3) intersection; and
(4) mountain road.

In a case where these four danger points are extracted, respective pieces of the content corresponding to these four points are sequentially reproduced.

Step S106 determines whether or not the reproduction process of all pieces of the content has been completed.

In a case where the reproduction process has not been completed, content output in step S105 continues.

When it is determined in step S106 that the reproduction process of all pieces of the content has been completed, the process proceeds to step S107.

### (Step S107)

In step S107, the start of the engine is allowed under a condition that it is determined in step S106 that all pieces of the content have been reproduced.

Note that the processes in steps S106 and S107 described above are executed under control of the control unit of the information processing apparatus.

That is, the control unit performs engine start control that allows the start of the engine in response to confirming the completion of the reproduction process of the output content.

In this flow, the start of the engine is allowed under a condition that the user (driver) finishes viewing all pieces of the content, such as accidents, corresponding to all danger points on the traveling route set by the user (driver), and enables driving to be started.

In a case where the viewing of the content such as accidents corresponding to the danger points on the traveling route is not completed, driving cannot be started.

Through such control, driving can be started after the user (driver) is made to realize the need of safe driving.

### <6. Hardware Configuration Example of Information Processing Apparatus>

A specific hardware configuration example of the information processing apparatus described above with reference to FIG. 11 will now be described with reference to FIG. 16.

A CPU (Central Processing Unit) 301 functions as a data processing unit that executes various processes in accordance with programs stored in a ROM (Read Only Memory) 302 or a storage unit 308. For example, the CPU 301 executes a process in accordance with the sequence described in the above-described embodiment. A RAM (Random Access Memory) 303 stores programs executed by the CPU 301 and data. The CPU 301, the ROM 302, and the RAM 303 are connected with each other via a bus 304.

The CPU 301 is connected with an input/output interface 305 via the bus 304. The input/output interface 305 is connected with an input unit 306 including a traveling-route setting unit including various switches, a keyboard, a touch panel, a mouse, a microphone, a sensor, a camera, a GPS, etc., and other components, and is connected with an output unit 307 including a display, a speaker, etc.

The CPU 301 receives commands, condition data, etc., from the input unit 306, executes various processes, and outputs the processed result to, for example, the output unit 307.

A storage unit 308 connected with the input/output interface 305 includes, for example, a hard disk etc., and stores programs executed by the CPU 301 and various data items. A communication unit 309 functions as a transmitting and receiving unit for data communication via a network such as the Internet and a local area network, and communicates with external devices.

A driver 310 connected with the input/output interface 305 drives a removable medium 311 such as magnetic disk, an optical disk, a magnetooptical disk, or a semiconductor storage unit such as a storage unit card.

### <7. Summary of Configuration of Present Disclosure>

Embodiments of the present disclosure have been described above in detail with reference to the specific embodiments. However, it will be apparent that those skilled in the art can achieve modifications and substitutions of the embodiments without departing from the scope of the present disclosure. That is, the present invention has been disclosed by way of example and should not be construed in a limited way. The claims should be taken into account in determining the subject matter of the present disclosure.

Note that the technique disclosed herein can have the following configuration.
(1) An information processing apparatus including:
   a traveling-route setting unit setting a traveling route of an automobile;
   an output-content determining unit determining, as output content, content indicating danger corresponding to the traveling route set by the traveling-route setting unit; and
   a content output unit outputting output content determined by the output-content determining unit,
   in which the output-content determining unit determines content indicating danger of a danger point extracted from the traveling route as output content.
(2) The information processing apparatus according to (1),
   in which the output-content determining unit determines, as output content, accident content indicating a danger corresponding to road characteristics of the danger point extracted from the traveling route.
(3) The information processing apparatus according to (1),
   in which the output-content determining unit determines, as output content, past accident content at a site near the danger point extracted from the traveling route.
(4) The information processing apparatus according to (1),
   in which the output-content determining unit estimates a time of arrival to the danger point from a time of setting the traveling route set by the traveling-route setting unit and a distance to the danger point, and determines, as output content, past accident content at a site near the danger point at the estimated time of arrival.
(5) The information processing apparatus according to any one of (1) to (4), further including:
   a storage unit storing a context/output-content correspondence map in which a context indicating condition data and content corresponding to the context are registered in association with each other,
   in which the output-content determining unit refers to the context/output-content correspondence map and determines, as output content, the content indicating danger at the danger point.
(6) The information processing apparatus according to any one of (1) to (5), further including:
   a control unit performing engine start control to allow engine start on the basis of confirmation of completion of a reproduction process of the output content.
(7) The information processing apparatus according to any one of (1) to (6),
   in which the content output unit includes at least one of a display unit mounted on the automobile or a portable terminal of a driver.
(8) The information processing apparatus according to any one of (1) to (6),
   in which image display through application of a projector by the content output unit is executed by displaying an image on a windshield of an automobile.
(9) An information processing method performed by an information processing apparatus, the method including:
   a traveling-route setting step of settshing a traveling route of an automobile by a traveling-route setting unit;
   an output-content determining step of determining, as output content, content indicating danger corresponding to the traveling route set in the traveling-route setting step, by an output-content determining unit; and
   a content output step of outputting output content determined in the output-content determining step, by the content output unit,
   in which, in the output-content determining step, content indicating danger of a danger point extracted from the traveling route is determined as output content.
(10) A program causing an information processing apparatus to execute information processing, the processing including:
   a traveling-route setting step of causing a traveling-route setting unit to set a traveling route of an automobile;
   an output-content determining step of causing an output-content determining unit to determine, as output content, content indicating danger corresponding to the traveling route set in the traveling-route setting step; and
   a content output step of causing the content output unit to output the output content determined by the output-content determining unit,
   in which, in the output-content determining step, the output-content determining unit determines content indicating danger of a danger point extracted from the traveling route as output content.

Also, the series of processes described in this specification can be performed by a hardware configuration, a software configuration, or a combination of both configurations. In a case where a process by software is executed, a program in which a processing sequence is recorded can be installed in a memory in a computer incorporated in dedicated hardware to be executed , or a program can be installed in a general-purpose computer capable of executing various processes to be executed. For example, the program can be preliminarily recorded in a recording medium. In addition to installing the program from a recording medium to a computer, the program can be received via a network such as a LAN (Local Area Network) or the Internet, and can be installed to a recording medium, such as an internal hard disk.

Note that the various processes described in this specification may be executed not only in a chronological order in accordance with the description, but may also be executed in parallel or individually, depending on the processing capability of the apparatus performing the processes or as necessary. In the present specification, a system is a logical assembly of a plurality of devices, and each device does not necessarily reside in the same housing.

### [Industrial Applicability]

As described above, according to the configuration of one embodiment of the present disclosure, content indicating danger of a danger point on a traveling route set by a driver is selected and presented to the driver, thereby realizing a configuration capable of enhancing the driver's awareness of safe driving.

Specifically, the configuration includes, for example, a traveling-route setting unit of an automobile; an output-an output-content determining unit determining, as output content, content indicating danger corresponding to the traveling route; and, content output unit outputting the output content determined by the output-content determining unit. The output-content determining unit determines content indicating danger of a danger point extracted from the traveling route as output content. For example, past accident content near a site of a danger point is determined as output content.

According to this configuration, it is possible to select content indicating danger of a danger point on a traveling route set by a driver, present the selected content to the driver, and enhance the driver's awareness of safe driving.

### [Reference Signs List]

- 10: Display unit
- 20: Viewer (driver)
- 30: Automobile
- 31: Output unit
- 110: Traveling-route setting unit
- 111: Input unit
- 112: Map information storing unit
- 113: Output-map-information determining unit
- 120: Output-content determining unit
- 121: Condition data analyzing unit
- 122: Context determining unit
- 123: Output-content selecting unit
- 124: Context/output-content correspondence map
- 125: Content storing unit
- 130: Route-information and content output unit
- 131: Output control unit
- 132: Display unit
- 133: Projector
- 134: Speaker
- 140: Control unit
- 150: Storage unit
- 201: Output unit
- 202: Output unit
- 203: Projector for AR image display
- 301: CPU
- 302: ROM
- 303: RAM
- 304: Bus
- 305: Input/output interface
- 306: Input unit
- 307: Output unit
- 308: Storage unit
- 309: Communication unit
- 310: Drive
- 311: Removable medium

## Claims

1. An information processing apparatus comprising:
a traveling-route setting unit setting a traveling route of an automobile;
an output-content determining unit determining, as output content, content indicating danger corresponding to the traveling route set by the traveling-route setting unit; and
a content output unit outputting output content determined by the output-content determining unit,
wherein the output-content determining unit determines content indicating danger of a danger point extracted from the traveling route as output content.

2. The information processing apparatus according to claim 1,
wherein the output-content determining unit determines, as output content, accident content indicating a danger corresponding to road characteristics of the danger point extracted from the traveling route.

3. The information processing apparatus according to claim 1,
wherein the output-content determining unit determines, as output content, past accident content at a site near the danger point extracted from the traveling route.

4. The information processing apparatus according to claim 1,
wherein the output-content determining unit estimates a time of arrival to the danger point from a time of setting the traveling route set by the traveling-route setting unit and a distance to the danger point, and determines, as output content, past accident content at a site near the danger point at the estimated time of arrival.

5. The information processing apparatus according to claim 1, further comprising:
a storage unit storing a context/output-content correspondence map in which a context indicating condition data and content corresponding to the context are registered in association with each other,
wherein the output-content determining unit refers to the context/output-content correspondence map and determines, as output content, the content indicating danger at the danger point.

6. The information processing apparatus according to claim 1, further comprising:
a control unit performing engine start control to allow engine start on a basis of confirmation of completion of a reproduction process of the output content.

7. The information processing apparatus according to claim 1,
wherein the content output unit includes at least one of a display unit mounted on the automobile or a portable terminal of a driver.

8. The information processing apparatus according to claim 1,
wherein image display through application of a projector by the content output unit is executed by displaying an image on a windshield of an automobile.

9. An information processing method performed by an information processing apparatus, the method comprising:
a traveling-route setting step of setting a traveling route of an automobile by a traveling-route setting unit;
an output-content determining step of determining, as output content, content indicating danger corresponding to the traveling route set in the traveling-route setting step, by an output-content determining unit; and
a content output step of outputting output content determined in the output-content determining step, by the content output unit,
wherein, in the output-content determining step, content indicating danger of a danger point extracted from the traveling route is determined as output content.

10. A program causing an information processing apparatus to execute information processing, the processing comprising:
a traveling-route setting step of causing a traveling-route setting unit to set a traveling route of an automobile;
an output-content determining step of causing an output-content determining unit to determine, as output content, content indicating danger corresponding to the traveling route set in the traveling-route setting step; and
a content output step of causing the content output unit to output the output content determined by the output-content determining unit,
wherein, in the output-content determining step, the output-content determining unit determines content indicating danger of a danger point extracted from the traveling route as output content.
